# EUROPÄISCHE PATENTSCHRIFT

(11) **EP 3 416 736 B1**
(45) Veröffentlichungstag und Bekanntmachung des Hinweises auf die Patenterteilung: **07.07.2021**
(21) Anmeldenummer: 17706423.5
(22) Anmeldetag: 08.02.2017
(51) Int. Cl.: B01D 53/32, F24C 15/20

(54) **VORRICHTUNG ZUR ANORDNUNG EINER ODER MEHRERER ELEKTRODEN EINES PLASMAFILTERS IN EINEM GEHÄUSE EINER DUNSTABZUGSVORRICHTUNG**
DEVICE FOR ARRANGING ONE OR MORE ELECTRODES OF A PLASMA FILTER IN A HOUSING OF A FUME HOOD APPARATUS
DISPOSITIF POUR AGENCER UNE OU PLUSIEURS ÉLECTRODES D'UN FILTRE À PLASMA DANS LE BOÎTIER D'UNE HOTTE ASPIRANTE

(30) Priorität: 15.02.2016 DE 102016202293
(43) Veröffentlichungstag der Anmeldung: 26.12.2018
(73) Patentinhaber: Bruckbauer, Wilhelm, 83115 Neubeuern (DE)
(72) Erfinder: IMMERZ, Anja, 87772 Pfaffenhausen (DE); GÖSSLER, Siegfried, 83043 Bad Aibling (DE)
(74) Vertreter: Rau, Schneck & Hübner Patentanwälte Rechtsanwälte PartGmbB
(86) Internationale Anmeldenummer: PCT/EP2017/052749
(87) Internationale Veröffentlichungsnummer: WO 2017/140554

(56) Entgegenhaltungen:
- EP-A1- 0 525 283
- EP-A1- 2 570 735
- DE-A1-102004 053 030
- DE-U1-202012 010 239
- US-A1- 2004 033 178
- US-A1- 2009 110 592

## Beschreibung

Die Erfindung betrifft eine Vorrichtung zur Anordnung einer oder mehrerer Elektroden eines Plasmafilters in einem Gehäuse. Die Erfindung betrifft weiterhin ein Plasmafilter-Modul mit einer entsprechenden Vorrichtung. Außerdem betrifft die Erfindung eine Anordnung eines Plasmafilter-Moduls in einem Sockelbereich eines Küchenunterschranks. Schließlich betrifft die Erfindung eine Dunstabzugs-Vorrichtung mit einem entsprechenden Plasmafilter-Modul.

Plasmafilter für einen Dunstabzug einer Küche sind beispielsweise aus der EP 2 570 735 A1, der WO 2014/007626 A1, der WO 2006/048183 A1, der WO 2014/049128 A1 und der DE 10 2014 110 637 A1 bekannt.
Es besteht Bedarf, derartige Plasmafilter weiterzuentwickeln. Es besteht insbesondere Bedarf, eine Vorrichtung zur Anordnung der Elektroden des Plasmafilters in dessen Gehäuse weiterzuentwickeln.
Diese Aufgabe wird durch die Merkmale des Anspruchs 1 gelöst.

Der Kern der Erfindung besteht darin, zur Anordnung der Elektroden des Plasmafilters Befestigungsmittel, welches als Befestigungsstift ausgebildet ist, zu verwenden, welche eine Kriechstrecke mit einer vorgegebenen Mindestlänge bereitstellen, und welche von einem Abschirmmittel, welches als Abschirmhülse ausgebildet ist, zumindest bereichsweise umgeben sind, wobei die Befestigungsmittel im Kriechbereich jeweils einen vorgegebenen Mindestabstand zum nächstliegenden Abschirmmittel aufweisen.

Hierdurch wird die Sicherheit der Elektrodenanordnung im Gehäuse wesentlich verbessert. Durch die Kombination der Befestigungsmittel und Abschirmmittel kann insbesondere ein Stromübergang oder Stromüberschlag auf das Gehäuse zuverlässig verhindert werden.

Durch die erfindungsgemäße Vorrichtung zur Anordnung einer Plasmafilter-Einheit, insbesondere deren Elektroden, in einem Gehäuse, wird insbesondere die Erfüllung normativer Anforderungen gewährleistet. Hierdurch wird die Sicherheit des Endverbrauchers sichergestellt. Es wird insbesondere sichergestellt, dass es auch beim Eintritt von Wasser ins Innere des Gehäuses nicht zu einem Spannungsüberschlag auf das Gehäuse kommt.

Gemäß einem Aspekt der Erfindung weisen die Befestigungsmittel insbesondere im Bereich, an welchem der Elektrodenhalter befestigt ist, ebenfalls jeweils einen vorgegebenen Mindestabstand zum Gehäuse auf. Der Abstand zum Gehäuse ist insbesondere mindestens so groß wie der vorgegebene Mindestabstand zwischen dem Befestigungsmittel und dem nächstliegenden Abschirmmittel.

Das Abschirmmittel weist außerdem insbesondere jeweils mindestens den vorgegebenen Mindestabstand zum Elektrodenhalter auf. Dies ist insbesondere wichtig, sofern der Elektrodenhalter aus einem elektrisch leitfähigen Material ist.

Der Elektrodenhalter ist üblicherweise aus Metall. Dies erleichtert seine Herstellung. Gemäß einem weiteren Aspekt der Erfindung kann vorgesehen sein, den Elektrodenhalter zumindest teilweise, insbesondere vollständig, aus einem elektrisch isolierenden Material, insbesondere aus einem Kunststoff, auszubilden. Hierdurch wird die Betriebssicherheit des Plasmafilter-Moduls weiter erhöht.

Gemäß einem weiteren Aspekt der Erfindung kann im Falle eines Elektrodenhalters aus einem elektrisch isolierenden Material auf ein separates Befestigungsmittel zur Befestigung des Elektrodenhalters im Gehäuse verzichtet werden. In diesem Fall übernimmt der Elektrodenhalter selbst die Aufgabe der Bereitstellung einer Kriechstrecke mit einer vorgegebenen Mindestlänge. In diesem Fall dient das Abschirmmittel zur Abschirmung des Elektrodenhalters.

Der Elektrodenhalter kann insbesondere einteilig mit dem Befestigungsmittel ausgebildet sein. Er kann auch fest oder lösbar mit dem Befestigungsmittel verbunden sein. Dies erleichtert die Herstellung. Der Elektrodenhalter kann insbesondere mit dem Befestigungsmittel verklebt, verschraubt oder vernietet sein. Auch andere Steckverbindung ist möglich. Zur Verschraubung des Elektrodenhalters mit dem Befestigungsmittel kann insbesondere eine Schraube aus einem isolierenden Material vorgesehen sein. Der Elektrodenhalter kann insbesondere mit Hilfe eines Nylonnagels mit dem Befestigungsmittel verbunden sein.

Das Befestigungsmittel kann insbesondere eine Länge im Bereich von 1 cm bis 15 cm, insbesondere im Bereich von 3 cm bis 12 cm, insbesondere im Bereich von 5 cm bis 10 cm, vorzugsweise von höchstens 9 cm, insbesondere von höchstens 8 cm aufweisen.

Der Befestigungsstift kann vorzugsweise konisch zulaufend ausgebildet sein. Der Öffnungswinkel liegt insbesondere im Bereich von 0,01° bis 15°.

Der Befestigungsstift kann einen sternförmigen, insbesondere einen kreuzförmigen Querschnitt aufweisen. Er kann insbesondere einen zentralen Bereich mit drei, vier, fünf oder mehr sich daran anschließenden, nach außen, das heißt in Radialrichtung erstreckenden Armen mit freien Enden aufweisen.

Vorzugsweise sind sämtliche Ecken beziehungsweise Kanten des Befestigungsstifts abgerundet. Insbesondere konkave Kanten sind derart abgerundet, dass sie einen Krümmungsradius von mindestens 0,5 mm, insbesondere mindestens 1 mm, insbesondere mindestens 2 mm, insbesondere mindestens 3 mm aufweisen. Hierdurch wird verhindert, dass es in den Ecken zu Kapillareffekten kommt.

Gemäß einer vorteilhaften Ausführung ist der Befestigungsstift jeweils beschichtet. Er weist insbesondere eine hydrophobe Beschichtung auf. Der Befestigungsstift kann insbesondere eine Beschichtung aufweisen, welche dazu führt, dass der Kontaktwinkel von Wasser mindestens 90°, insbesondere mindestens 120°, insbesondere mindestens 150° beträgt. Dies führt zu einer extrem geringen Benetzbarkeit des Befestigungsstifts. Möglicherweise auf ihn auftreffendes Wasser perlt ab und tropft in das Gehäuse.

Gemäß einem weiteren Aspekt der Erfindung können im Boden des Gehäuses Austrittsöffnungen vorgesehen sein, welche ein Austreten von Flüssigkeit, insbesondere Wasser, aus dem Gehäuse ermöglichen. Im Bereich dieser Austrittsöffnungen kann jeweils eine Auffangschale vorgesehen sein.

Gemäß einem weiteren Aspekt der Erfindung weist der Befestigungsstift im Bereich seines freien Endes ein Innengewinde auf. Hierdurch wird die Befestigung des Elektrodenhalters erleichtert.

Die Abschirmhülse bildet insbesondere einen Spritzschuss, welcher absolut zuverlässig verhindert, dass in das Gehäuse des Plasmafilters ungewollt eintretendes Wasser auf die Oberfläche des Befestigungsmittels gelangt. Die Abschirmhülse stellt somit sicher, dass die Oberfläche des Befestigungsmittels zumindest im Kriechbereich stets trocken ist.

Die Abschirmhülse umgibt das Befestigungsmittel insbesondere in Radialrichtung. Sie umgibt das Befestigungsmittel in Radialrichtung insbesondere vollständig.

Die Abschirmhülse kann hohlzylinderförmig, insbesondere kreiszylinderförmig, ausgebildet sein. Sie ist vorzugsweise ebenso wie der Befestigungsstift leicht konisch zulaufend ausgebildet. Hierdurch wird die Herstellung, insbesondere die Entformung, erleichtert.

Die Abschirmhülse ist insbesondere abgesehen von ihrer dem freien Ende des Befestigungsmittels zugewandten Ende nach außen geschlossen ausgebildet.

Gemäß einem weiteren Aspekt der Erfindung sind das Befestigungsmittel und/oder das Abschirmmittel jeweils zumindest teilweise, insbesondere vollständig, aus einem elektrisch isolierenden Material ausgebildet. Sie sind insbesondere vollständig aus einem elektrisch isolierenden Material. Sie können insbesondere aus Kunststoff, Glas, Holz, Stein oder Keramik oder einer Kombination dieser Materialien sein. Sie sind insbesondere mechanisch steif. Sie sind insbesondere hitze- und feuchtigkeitsbeständig. Sie sind vorzugsweise aus einem nicht-brennbaren Material.

Diese Materialeigenschaften des Befestigungsmittels und/oder des Abschirmmittels tragen zur Betriebssicherheit des Plasmafilter-Moduls bei.

Gemäß einem weiteren Aspekt der Erfindung sind das Befestigungsmittel und das Abschirmmittel jeweils fix miteinander verbunden. Sie können insbesondere einteilig ausgebildet sein. Sie sind insbesondere materialschlüssig miteinander verbunden. Sie können auch als zwei separate Elemente, welche fix oder lösbar miteinander verbunden sind, ausgebildet sein. Sie können insbesondere als Spritzgießteile ausgebildet sein. Es ist insbesondere möglich, das Befestigungsmittel und das Abschirmmittel, insbesondere den Befestigungsstift mit der ihn umgebenden Abschirmhülse als ein einziges Spritzgussteil herzustellen. Dies führt zu einer besonders stabilen Ausbildung.

Die Abschirmhülse kann auf ihrer Außenseite Befestigungselemente, insbesondere Rastnasen, zur lösbaren Befestigung derselben an einer Haltestruktur, insbesondere an einer Halteschiene, aufweisen. Hierdurch wird die Anordnung der Hülse im Gehäuse des Plasmafilter-Moduls vereinfacht.

Eine weitere Aufgabe der Erfindung besteht darin, ein Plasmafilter-Modul zu verbessern. Diese Aufgabe wird durch ein Plasmafilter-Modul mit einer Vorrichtung gemäß der vorhergehenden Beschreibung zur Anordnung der Elektroden im Gehäuse gelöst.

Die Elektroden des Plasmafilters sind insbesondere mittels der Vorrichtung gemäß der vorhergehenden Beschreibung im Gehäuse angeordnet, insbesondere aufgehängt.

Gemäß einem Aspekt der Erfindung weist insbesondere der Elektrodenhalter, das mindestens eine Befestigungsmittel und das eine Abschirmmittel einen Mindestabstand vom Boden des Gehäuses auf. Der Mindestabstand beträgt insbesondere mindestens 0,5 cm, insbesondere mindestens 1 cm, insbesondere mindestens 1,5 cm, insbesondere mindestens 2 cm. Der Mindestabstand ist insbesondere größer als der Abstand der unteren Kante einer Einström- und/oder Ausströmöffnung vom Boden des Gehäuses. Hierdurch wird sichergestellt, dass weder der Elektrodenhalter noch das mindestens eine Befestigungsmittel noch das eine Abschirmmittel mit sich gegebenenfalls am Boden des Gehäuses ansammelndem Wasser in Kontakt kommen kann. Es ist insbesondere sichergestellt, dass mindestens ein halber Liter Wasser, insbesondere mindestens ein Liter Wasser in das Gehäuse des Plasmafilter-Moduls eindringen kann, ohne dass es zu einem Kontakt des Elektrodenhalters oder eines der Befestigungsmittel oder eines der Abschirmmittel mit dem Wasser kommt.

Das Gehäuse ist insbesondere kistenförmig. Das Gehäuse hat abgesehen von einem Anschlussstutzen eine Form, welche durch einen allgemeinen Zylinder mit einer trapezförmigen, nicht-rechteckigen oder rechteckigen Leitkurve, einem trapezförmigen, nicht-rechteckigen oder rechteckigen Querschnitt, beschrieben werden kann.

Gemäß einem Aspekt der Erfindung weist das Gehäuse eine Gesamthöhe von höchstens 16 cm, insbesondere höchstens 15 cm, insbesondere höchstens 12 cm, insbesondere höchstens 10 cm, insbesondere höchstens 9 cm, insbesondere höchstens 8 cm, insbesondere höchstens 6 cm, insbesondere höchstens 5 cm auf. Das Gehäuse weist insbesondere eine Gesamthöhe auf, welche geringer ist als die Sockelhöhe eines Küchenunterschranks. Hierdurch wird eine Anordnung des Plasmafilter-Moduls in einem Sockelbereich eines Küchenunterschranks ermöglicht. Dies ist insbesondere in Verbindung mit sogenannten Downdraft-Systemen, bei welchen Kochdünste ausgehend von einer Kochfeldebene nach unten abgezogen werden, vorteilhaft.

Gemäß einem weiteren Aspekt der Erfindung ist die mindestens eine Einströmöffnung in einer Seitenwand des Gehäuses angeordnet. Auch dies erleichtert die Anordnung des Plasmafilter-Moduls in einem Sockelbereich eines Küchenunterschranks.

Gemäß einem weiteren Aspekt der Erfindung sind in den übrigen drei Seitenwänden des Gehäuses Ausströmöffnungen angeordnet. Im Bereich der Ausströmöffnungen können insbesondere Aktivkohlefilter angeordnet sein. Die Aktivkohle dient insbesondere zur Neutralisierung anfallenden Ozons. Neben Aktivkohle können auch andere Stoffe als Katalysator verwendet werden, z. B. Cellulit.
Gemäß einem weiteren Aspekt der Erfindung kann das Plasmafilter-Modul für einen bestimmungsgemäßen Gebrauch horizontal oder vertikal montiert werden. Die Einströmöffnung kann mit anderen Worten parallel zu einer vertikal verlaufenden Ebene oder parallel zur Horizontalen ausgerichtet sein. Das Plasmafilter-Modul kann somit insbesondere sowohl im Sockel eines Küchenunterschranks als auch hinter einem Küchenunterschrank montiert werden. Dies erleichtert es, einen Platz für das Plasmafilter-Modul zu finden.

Eine weitere Aufgabe der Erfindung besteht darin, eine Dunstabzugs-Vorrichtung zu verbessern. Diese Aufgabe wird durch eine Dunstabzugs-Vorrichtung mit einem Plasmafilter-Modul gemäß der vorhergehenden Beschreibung gelöst.

Mittels des Plasmafilter-Moduls können insbesondere Gerüche effizient entfernt werden. Dies ist insbesondere im Falle eines Umluftbetriebs der Dunstabzugs-Vorrichtung vorteilhaft. Bei dem Dunstabzug kann es sich insbesondere um einen Muldenlüfter, das heißt ein sogenanntes Downdraft-System, handeln.

Das Plasmafilter-Modul kann in Strömungsrichtung vor oder hinter einem Lüfterelement angeordnet sein.

Gemäß einem Effekt der Erfindung ist das Plasmafilter-Modul an den Dunstabzug gekoppelt. Es kann insbesondere derart an die Absaugeinrichtung gekoppelt sein, dass der Plasmafilter automatisch eingeschaltet wird, wenn die Absaugeinrichtung aktiviert wird, insbesondere wenn die Absaugeinrichtung einen Kochdunststrom mit einem Mindestvolumenstrom erzeugt.

Entsprechend kann vorgesehen sein, das Plasmafilter-Modul derart an die Absaugeinrichtung zu koppeln, dass es beim Abschalten derselben automatisch ausgeschaltet wird.

Wie bereits erwähnt, kann das Plasmafilter-Modul im Sockelbereich eines Küchenunterschranks platziert werden.

Weitere Vorteile und Details der Erfindung ergeben sich aus der Beschreibung von Ausführungsbeispielen anhand der Zeichnungen. Es zeigen:
- Fig. 1: eine Ansicht eines Plasmafilter-Moduls,
- Fig. 2: eine schematische Darstellung einer Dunstabzugs-Vorrichtung mit einem Downdraft-System und einem im Sockelbereich eines Küchenunterschranks angeordneten Plasmafilter-Moduls gemäß Fig. 1,
- Fig. 3: eine Darstellung einer Lüftereinheit und eines nachgeschalteten Plasmafilter-Moduls bei einer horizontalen Anordnung desselben,
- Fig. 4: eine Darstellung einer Lüftereinheit und eines nachgeschalteten Plasmafilter-Moduls bei einer vertikalen Anordnung desselben,
- Fig. 5: eine Ansicht des Plasmafilter-Moduls gemäß Fig. 1 bei abgenommenem Gehäusedeckel,
- Fig. 6: eine perspektivische Ansicht von Teilen des Plasmafilter-Moduls gemäß Fig. 5 zur Erläuterung der Anordnung der Elektroden des Plasmafilters im Gehäuse,
- Fig. 7: eine Detaildarstellung des Befestigungsstiftes zur Aufhängung des Elektrodenhalters mit der ihn umgebenden Hülse, und
- Fig. 8: einen Querschnitt durch den Befestigungsstift mit der ihn umgebenden Hülse gemäß Fig. 7, wobei in der Fig. 8 ein Teil des Elektrodenhalters, welcher am Befestigungsstift befestigt ist und ein Teil einer der Plasmaelektroden dargestellt ist.

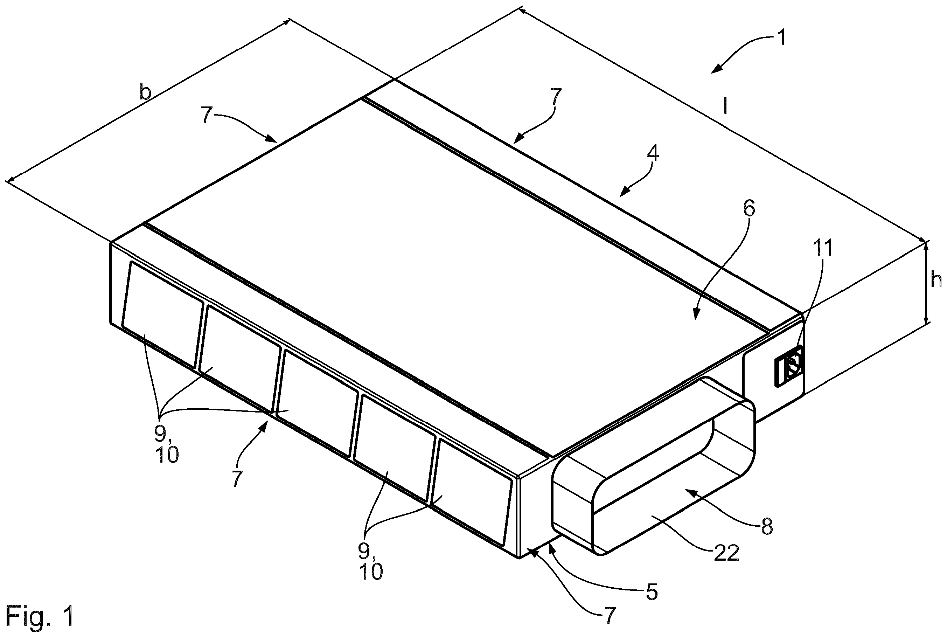

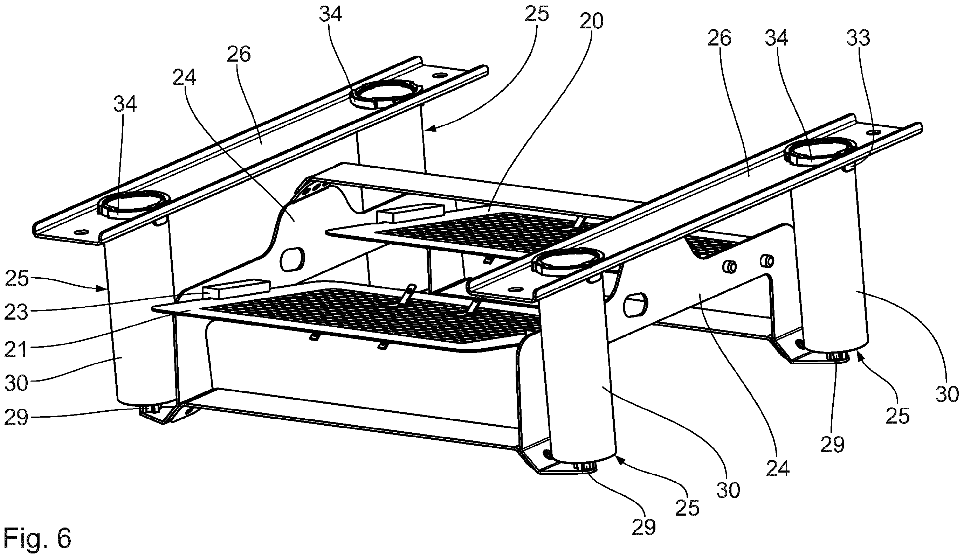

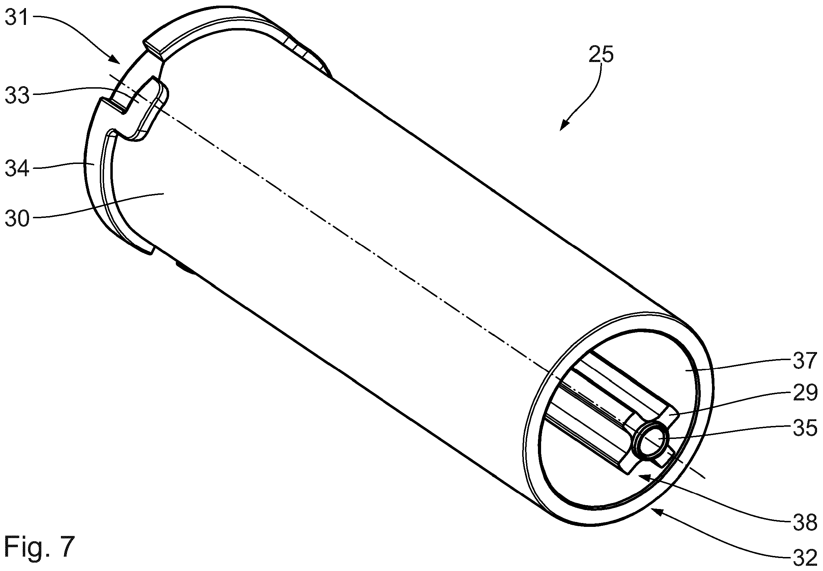

Im Folgenden wird unter Bezug auf die Fig. 1 bis 8 ein Plasmafilter-Modul 1 sowie dessen Anordnung in Verbindung mit einer Dunstabzugs-Vorrichtung, insbesondere in Verbindung mit einem Muldenlüfter, welcher auch als Downdraft-System bezeichnet wird, beschrieben.

Das Plasmafilter-Modul 1 umfasst eine Plasmafilter-Einheit 3, welche in einem Gehäuse 4 angeordnet ist. Die grundsätzliche Funktionsweise der Plasmafilter-Einheit 3 ist aus dem Stand der Technik, beispielsweise der WO 2006/048183 A1, der WO 2014/049128 A1, der WO 2014/007626 A1 und der DE 10 2014 110 637 A1, auf die hiermit verwiesen wird, bekannt.

Das Gehäuse 4 ist kistenförmig, insbesondere im Wesentlichen quaderförmig, ausgebildet. Es weist einen Gehäuseboden 5 und einen Gehäusedeckel 6 auf. Der Gehäusedeckel 6 ist abnehmbar. Es weist außerdem Seitenwände 7 auf. Die Seitenwände 7 sind im Wesentlichen senkrecht zum Gehäuseboden 5 und senkrecht zur Gehäusedeckel 6 angeordnet. Sie können auch leicht schräg zum Gehäuseboden 5 und/oder zum Gehäusedeckel 6 angeordnet sein.

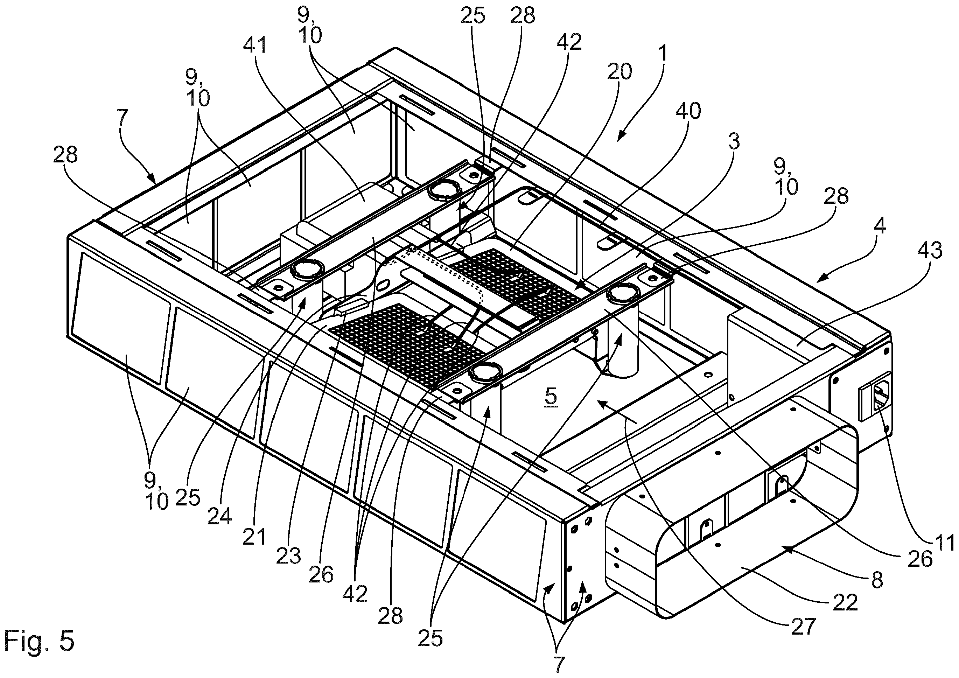

In einer der Seitenwände 7 ist ein Kanalanschluss 22 mit einer Einströmöffnung 8 für einen Kochdunststrom angeordnet. Der Kochdunststrom strömt entlang einer Einströmrichtung 27 durch die Einströmöffnung 8 in das Gehäuse 4. In der Fig. 5 ist die Einströmrichtung 27 des Kochdunststromes durch einen Pfeil gekennzeichnet. In den übrigen drei Seitenwänden 7 sind jeweils Ausströmöffnungen 9 angeordnet. Es ist auch möglich, nur in einer oder zwei der Seitenwände 7 Ausströmöffnungen 9 vorzusehen. Grundsätzlich können auch mehrere Einströmöffnungen 8 vorgesehen sein. Dies ermöglicht es, eine Mehrzahl von Abluftkanälen 14 mit dem Plasmafilter-Modul 1 zu verbunden.

Im Bereich der Ausströmöffnungen 9 sind jeweils Aktivkohlefilter-Elemente 10 angeordnet.

Der Kanalanschluss 22 ist als Flachkanal-Stutzen ausgebildet. Der Kanalanschluss 22 dient zum luftdichten Anschluss des Abluftkanals 14 an das Plasmafilter-Modul 1. Die Einströmöffnung 8 weist eine freie Querschnittsfläche von mindestens 100 cm², insbesondere mindestens 125 cm², insbesondere mindestens 150 cm², vorzugsweise mindestens 175 cm², vorzugsweise mindestens 200 cm² auf.

An einer der Seitenwände 7, insbesondere im Bereich der Seitenwand 7 mit der Einströmöffnung 8, ist ein Stromanschluss 11 zur Stromversorgung der Plasmafilter-Einheit 3 vorgesehen.

Das Gehäuse 4 ist flach ausgebildet. Es weist eine Gesamtbauhöhe h von höchstens 16 cm, insbesondere höchstens 15 cm, insbesondere höchstens 12 cm, insbesondere höchstens 10 cm, insbesondere höchstens 9 cm, insbesondere höchstens 8 cm auf. Es weist eine Breite b von höchstens 50 cm, insbesondere höchstens 45 cm, insbesondere höchstens 40 cm, insbesondere höchstens 35 cm auf. Es weist eine Länge 1 von höchstens 80 cm, insbesondere höchstens 60 cm, insbesondere höchstens 55 cm, insbesondere höchstens 50 cm auf. Andere Abmessungen sind ebenso möglich.

Das Gehäuse 4 ist aus einem formstabilen Material. Es kann beispielsweise aus Aluminium, Stahl, insbesondere Edelstahl, oder vorzugsweise aus Kunststoff sein. Es kann prinzipiell auch zumindest teilweise aus Holz sein.

Das Material des Gehäuses 4 ist vorzugsweise resistent gegen Ozon.

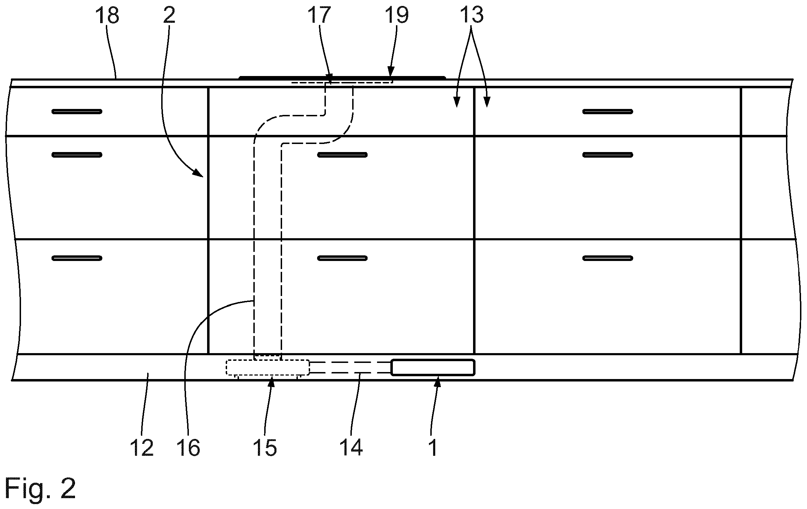

Wie in der Fig. 2 exemplarisch dargestellt ist, kann das Plasmafilter-Modul 1 in einem Sockelbereich 12 eines Küchenunterschranks 13 angeordnet sein. Es ist insbesondere möglich, das Plasmafilter-Modul 1 vollständig unterhalb der Bodenplatte der untersten Schublade des Küchenunterschranks 13 anzuordnen. Der Küchenunterschrank 13 braucht hierfür nicht modifiziert zu werden.

Das Plasmafilter-Modul 1 ist über ein Verbindungsstück, insbesondere in Form des Abluftkanals 14, mit einem Lüfterbaustein 15 verbunden. Das Plasmafilter-Modul 1 ist insbesondere luftdicht mit dem Lüfterbaustein 15 verbunden. Zur Abdichtung nach außen kann insbesondere im Bereich der Kanalanschlüsse ein Dichtband angeordnet werden. Der Lüfterbaustein 15 ist seinerseits über einen weiteren Abluftkanal 16 mit einer Eintrittsöffnung 17 zum Eintritt von Kochdünsten verbunden. Die Eintrittsöffnung 17 ist auf Höhe einer Kochfeldebene 18, insbesondere im Bereich eines Kochfeldes 19 oder neben einem solchen angeordnet.

Beim Dunstabzug-System handelt es sich insbesondere um einen Muldenlüfter, welcher auch als Downdraft-System bezeichnet wird. Das Plasmafilter-Modul 1 kann mit anderen Dunstabzug-Systemen, insbesondere mit Dunstabzugshauben, verwendet werden. Es kann beispielsweise auch im Bereich zwischen einem Küchenoberschrank und einer Zimmerdecke angeordnet werden.

Beim Dunstabzug-System handelt es sich insbesondere um ein UmluftSystem. Die durch die Eintrittsöffnung 17 abgesaugte Luft tritt durch die Ausströmöffnungen 9 des Plasmafilter-Moduls 1 wieder aus und bleibt somit im Zimmer.

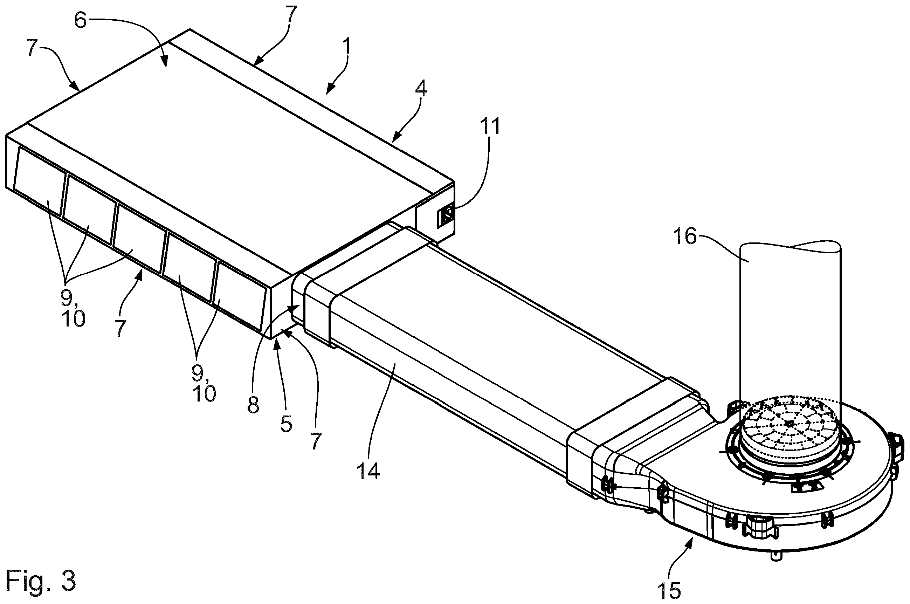

In der Fig. 3 ist noch einmal die Anordnung des Plasmafilter-Moduls 1 relativ zum Lüfterbaustein 15 dargestellt. Bei der in der Fig. 3 dargestellten Alternative ist der Abluftkanal 14 als geradliniger Flachkanal ausgebildet. Das Plasmafilter-Modul 1 ist bei dieser Alternative horizontal angeordnet. Die in der Fig. 3 dargestellte Alternative der Anordnung des Plasmafilter-Moduls 1 eignet sich insbesondere zur Anordnung des Plasmafilter-Moduls 1 im Sockelbereich 12 eines Küchenunterschranks 13.

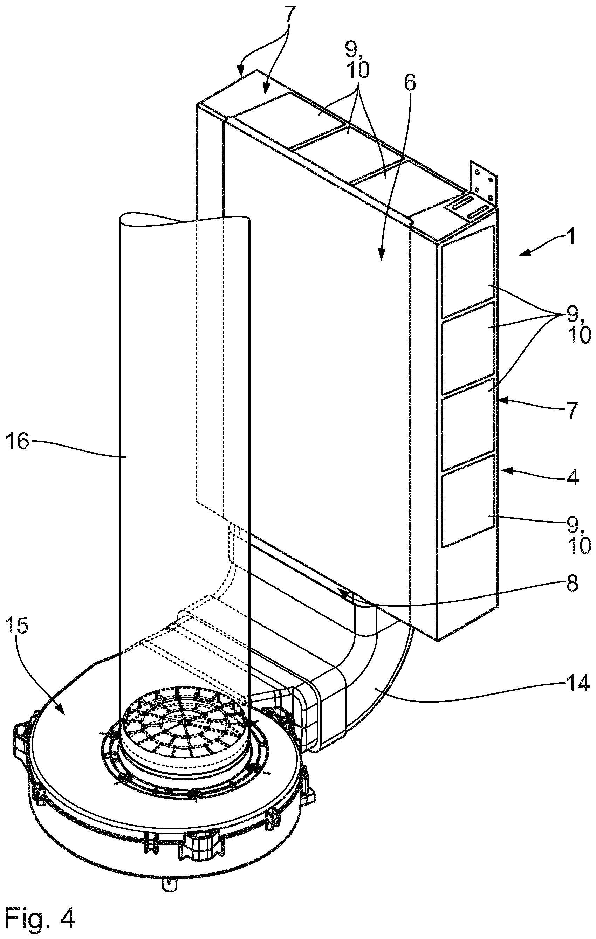

In der Fig. 4 ist eine Variante mit einer vertikal ausgerichteten Anordnung des Plasmafilter-Moduls 1 gezeigt. Bei dieser Variante ist das Plasmafilter-Modul 1 über einen gebogenen Abluftkanal 14 mit dem Lüfterbaustein 15 verbunden. Die in Fig. 4 dargestellte Alternative eignet sich insbesondere zur Anordnung des Plasmafilter-Moduls 1 hinter einem Küchenunterschrank 13, das heißt im Bereich zwischen der Rückseite des Küchenunterschranks und einer Zimmerwand.

Im Folgenden werden Details der Anordnung der Plasmafilter-Einheit 3, insbesondere der Elektroden 20, 21 derselben, im Gehäuse 4 beschrieben.

Die Elektroden 20, 21 sind durch Isolationselemente 23 von einem Elektrodenhalter 24 elektrisch isoliert. Das Isolationselement 23 kann insbesondere als elastischer Block, insbesondere aus Silikon, ausgebildet sein. Der Elektrodenhalter 24 bildet einen Rahmen oder ein Gestell zur Anordnung und Halterung der Elektroden 20, 21. Die Elektroden 20, 21 werden insbesondere vom Elektrodenhalter 24 in einer vorgegebenen Position relativ zueinander, insbesondere parallel zueinander, gehalten. Der Elektrodenhalter 24 kann einteilig oder mehrteilig ausgebildet sein. Er kann aus Metall sein. Er kann insbesondere auch aus einem elektrisch isolierenden Material, insbesondere aus Kunststoff, sein. Der Elektrodenhalter 24 ist insbesondere aus einem feuchtigkeitsbeständigen Material. Die in den Figuren dargestellte Anordnung der Elektroden 20, 21 ist exemplarisch zu verstehen. Andere Anordnungen der Elektroden sind ebenso möglich. Die Elektroden 20, 21 sind insbesondere derart ausgebildet und/oder angeordnet, dass es zu einem möglichst intensiven Kontakt des durch die Einströmöffnung 8 in das Gehäuse 4 einströmenden Kochdunststromes mit den Elektroden 20, 21, insbesondere dem mittels der Elektroden 20, 21 erzeugten Plasmas, kommt. Zur Verbesserung des Kontaktes des Kochdunststroms mit dem Plasmabereich können im Gehäuse 4 strömungsleitende Mittel, welche in den Figuren nicht dargestellt sind, vorgesehen sein. Es kann insbesondere vorgesehen sein, strömungsbeeinflussende Mittel im Gehäuse 4 anzuordnen, welche für eine Verwirbelung des eintretenden Kochdunststromes sorgen.

Der Elektrodenhalter 24 ist mittels vier Befestigungs-Elementen 25 im Gehäuse 4 angeordnet. Er ist insbesondere im Gehäuse 4 aufgehängt. Die Befestigungselemente 25 sind insbesondere jeweils an Befestigungsschienen 26 befestigt. Sie sind insbesondere fix oder lösbar mit den Befestigungsschienen 26 verbunden.

Die Befestigungsschienen 26 können aus Metall oder aus einem elektrisch isolierenden Material, insbesondere aus Kunststoff, sein. Sie sind fix oder lösbar mit dem Gehäuse 4 verbunden. Sie können insbesondere mit am Gehäuse 4 vorgesehenen Befestigungslaschen 28 verbunden sein. Sie können insbesondere mit den Befestigungslaschen 28 verschraubt oder vernietet sein. Sie können auch in die Befestigungslaschen 28 eingesteckt sein. Sie können auch formschlüssig mit den Befestigungslaschen 28 verbunden sein. Vorzugsweise sind die Befestigungsschienen 26 lösbar mit dem Gehäuse 4 verbunden. Dies ermöglicht es, die Plasmafilter-Einheit 3 aus dem Gehäuse 4 zu entnehmen. Hierdurch wird Montage und Wartung der Plasmafilter-Einheit 3 erleichtert.

Die Befestigungselemente 25 umfassen jeweils einen Befestigungsstift 29 und eine diesen umgebende Abschirmhülse 30. Im Bereich eines ersten Endes 31 ist der Befestigungsstift 29 mit der Abschirmhülse 30 mechanisch verbunden. Im Bereich eines dem ersten Ende gegenüberliegenden zweiten Endes weisen der Befestigungsstift 29 und die Abschirmhülse 30 jeweils ein freies Ende auf. Abgesehen von der Verbindung im Bereich des ersten Endes 31 sind der Befestigungsstift 29 und die Abschirmhülse 30 berührungsfrei zueinander angeordnet. Sie weisen insbesondere über ihre gesamte Länge L_{B}, L_{H} einen Abstand d auf, welcher mindestens so groß ist wie ein vorgegebener Mindestabstand dₘᵢₙ, d ≥ dₘᵢₙ. Der Mindestabstand dₘᵢₙ liegt insbesondere im Bereich von 0,5 mm bis 120 mm. Der Mindestabstand dₘᵢₙ beträgt insbesondere mindestens 1 mm, insbesondere mindestens 2 mm, insbesondere mindestens 3 mm, insbesondere mindestens 4 mm, insbesondere mindestens 5 mm, insbesondere mindestens 6 mm, insbesondere mindestens 7 mm, insbesondere mindestens 8 mm, insbesondere mindestens 10 mm. Der Mindestabstand dₘᵢₙ beträgt insbesondere höchstens 100 mm, insbesondere höchstens 50 mm, insbesondere höchstens 30 mm, insbesondere höchstens 20 mm, insbesondere höchstens 15 mm.

Die Länge L_{B} des Befestigungsstiftes 29 liegt im Bereich von 1 cm bis 25 cm. Sie beträgt insbesondere mindestens 2 cm, insbesondere mindestens 3 cm, insbesondere mindestens 5 cm, insbesondere mindestens 6 cm. Sie beträgt vorzugsweise höchstens 15 cm, insbesondere höchstens 12 cm, insbesondere höchstens 10 cm, insbesondere höchstens 9 cm, insbesondere höchstens 8 cm, insbesondere höchstens 7 cm.

Im Bereich des ersten Endes 31 ist das Befestigungselement 25 insbesondere vollständig geschlossen. Die Verbindung zwischen dem Befestigungsstift 29 und der Abschirmhülse 30 im Bereich des ersten Endes 31 bildet insbesondere einen Deckel 36. Der Deckel 36 deckt den zwischen dem Befestigungsstift 29 und der Abschirmhülse 30 befindlichen Hohlraum 37 am ersten Ende 31 in Längsrichtung ab. Der Hohlraum 37 ist insbesondere vom Deckel 36 und der Abschirmhülse 30 flüssigkeitsdicht nach außen abgeschlossen. Er weist jedoch im Bereich des zweiten Endes 32 eine nach außen offene Öffnung 38 auf. Die Öffnung 38 wird in Radialrichtung nach außen von der Abschirmhülse 30 begrenzt. In ihrem Inneren, insbesondere im Zentrum der Öffnung 38, befindet sich der Befestigungsstift 29.

Der vom Hohlraum 37 umgebene Bereich des Befestigungsstiftes 29 dient als Kriechbereich zur Bereitstellung einer Kriechstrecke mit einer vorgegebenen Mindestlänge lₘᵢₙ. Die Länge der Kriechstrecke kann durch die Länge L_{B} des Befestigungsstiftes 29, im Falle einer nicht-geradlinigen Ausbildung des Befestigungsstiftes 29, durch die effektive Länge desselben, erreicht werden, L_{B} ≥ lₘᵢₙ. Die vorgegebene Mindestlänge lₘᵢₙ kann insbesondere durch Sicherheitsvorschriften, insbesondere Normen, vorgegeben sein. Die Mindestlänge lₘᵢₙ kann insbesondere mindestens 1 cm, insbesondere mindestens 2 cm, insbesondere mindestens 3 cm, insbesondere mindestens 4 cm, insbesondere mindestens 5 cm, insbesondere mindestens 6 cm, insbesondere mindestens 8 cm, insbesondere mindestens 10 cm betragen. Sie beträgt vorzugsweise höchstens 20 cm, insbesondere höchstens 15 cm, insbesondere höchstens 12 cm.

Der Befestigungsstift 29 steht im Bereich des zweiten Endes 32 um einen Überstand u über die Abschirmhülse 30 über. Der Überstand u ist insbesondere mindestens so groß wie der Mindestabstand dₘᵢₙ zwischen dem Befestigungsstift 29 und der Abschirmhülse 30.

Der Befestigungsstift 29 hat über seine gesamte Länge eine leicht konische Form. Der Öffnungswinkel w liegt insbesondere im Bereich von 0,01° bis 15°, insbesondere im Bereich von 0,5° bis 10°, insbesondere im Bereich von 1° bis 5°.

Die Abschirmhülse 30 ist vorzugsweise ebenfalls leicht konisch ausgebildet. Hierdurch wird die Ausformung des Befestigungselements 25 erleichtert. Zur Herstellung des Befestigungselements 25 kann insbesondere ein Spritzgießverfahren vorgesehen sein.

Die Abschirmhülse 30 weist im Bereich des ersten Endes 31 Rastnasen 33 zur verrastenden Verbindung mit der Befestigungsschiene 26 auf. Die Rastnasen 33 bilden allgemein Befestigungselemente zur Befestigung, insbesondere zur lösbaren Befestigung, des Befestigungselements 25 an der Befestigungsschiene 26. Anstelle der Rastnasen 33 können auch alternative Befestigungselemente vorgesehen sein.

Die Abschirmhülse 30 weist außerdem im Bereich des ersten Endes 31 einen wulstartige Rand 34 auf. Mit Hilfe des wulstartigen Randes 34 und der Rastnasen 33 ist eine einfache, stabile und dennoch lösbare Verbindung des Befestigungselements 25 an der Befestigungsschiene 26 möglich.

Der Elektrodenhalter 24 ist mit Hilfe eines Nylonnagels 35 am Befestigungsstift 29 befestigt. Anstelle des Nylonnagels 35 kann auch eine Schraube, insbesondere aus einem elektrisch isolierenden Material, beispielsweise eine Kunststoffschraube, vorgesehen sein. In diesem Fall weist der Befestigungsstift 29 im Bereich seines freien Endes ein dazu passendes Innengewinde auf.

Der Elektrodenhalter 24 kann auch auf andere Weise mit dem Befestigungsstift 29 mechanisch verbunden sein. Er kann insbesondere auf den Befestigungsstift 29 aufgesteckt, insbesondere mit diesem verrastet sein. Hierzu kann der Befestigungsstift 29 im Bereich seines freien Endes Rastnasen aufweisen. Der Elektrodenhalter 24 kann auch mit dem Befestigungsstift 29 verklebt, verschweißt oder vernietet sein.

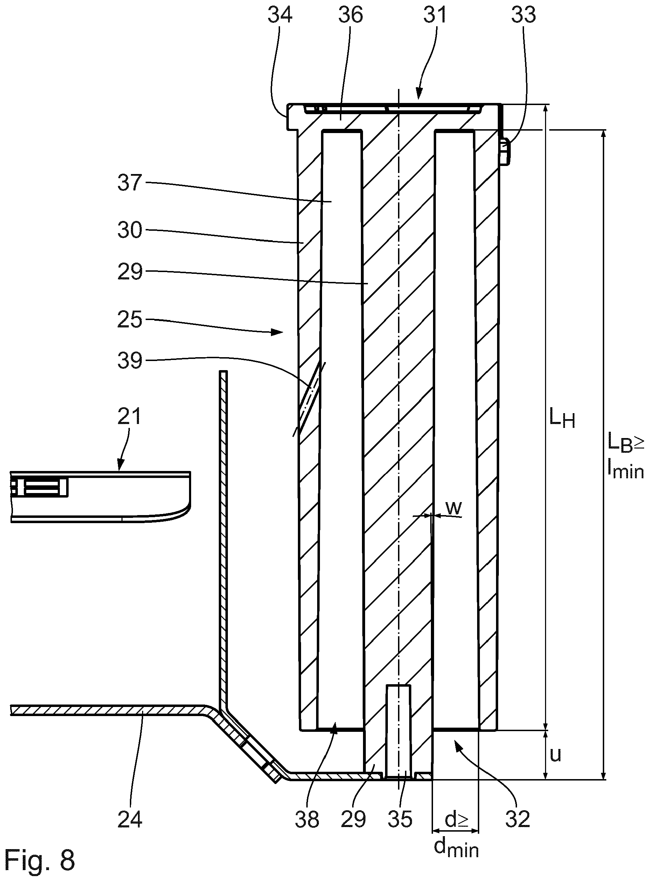

Gemäß einer in der Fig. 8 angedeuteten Alternative kann vorgesehen sein, die Abschirmhülse 30 mit Bohrungen 39 zu versehen. Hierdurch kann ein Luftaustausch im Hohlraum 37 verbessert und dadurch eine Kondensatbildung im Hohlraum 37 verhindert werden. Die Bohrungen 39 sind vorzugsweise schräg zur Längsachse des Befestigungselements 25 angeordnet. Sie sind insbesondere derart angeordnet, dass der oberste Punkt der äußeren Öffnung der Bohrung 39 im Falle einer vertikalen Ausrichtung des Befestigungselements 25 unterhalb des untersten Punktes der inneren Öffnung der Bohrung 39 liegt.

Der Befestigungsstift 29 und/oder die Abschirmhülse 30 sind aus einem elektrisch isolierenden Material, insbesondere aus Kunststoff, Nylon, Glas, Holz oder einer Kombination derartiger Materialien.

Das Material ist insbesondere feuchtigkeitsbeständig und/oder feuchtigkeitsabweisend. Es ist vorzugsweise hitzebeständig, insbesondere nichtbrennbar. Der Befestigungsstift 29 ist insbesondere in Längsrichtung geradlinig ausgebildet. Er kann prinzipiell auch wellenförmig oder spiralförmig ausgebildet sein. Hierdurch kann die Kriechstrecke bei vorgegebener Länge des Befestigungsstiftes 29 vergrößert werden.

Der Befestigungsstift 29 weist einen kreuzförmigen Querschnitt auf. Die kreuzförmige Ausbildung des Befestigungsstiftes 29 führt zu fertigungstechnischen Vorteilen. Außerdem führt sie zu einer erhöhten mechanischen Stabilität, insbesondere Steifigkeit, insbesondere Biegesteifigkeit des Befestigungsstiftes 29.

Der Befestigungsstift 29 weist allgemein einen sternförmigen Querschnitt mit einem Zentralbereich und sich ausgehend von diesem nach außen, das heißt in Radialrichtung, erstreckenden Armen auf. Es können drei, vier, fünf, sechs oder mehr Arme vorgesehen sein. Die Arme weisen insbesondere freie Enden auf. Der Befestigungsstift 29 kann auch einen runden, insbesondere einen kreisförmigen Querschnitt aufweisen.

Vorzugsweise sind sämtliche Ecken und Kanten des Befestigungsstiftes 29 abgerundet ausgebildet. Insbesondere die konkaven Ecken des Befestigungsstiftes 29 sind abgerundet ausgebildet. Sie weisen jeweils einen Krümmungsradius von mindestens 0,5 mm, insbesondere mindestens 1 mm, insbesondere mindestens 2 mm, insbesondere mindestens 3 mm auf. Hierdurch wird ein Kriechen von Flüssigkeit entlang der Längsachse des Befestigungsstiftes 29 aufgrund von Kapillarkräften verringert, insbesondere vermieden.

Gemäß einer vorteilhaften Ausführungsform kann der Befestigungsstift 29 eine Beschichtung, insbesondere eine hydrophobe Beschichtung, aufweisen. Auch hierdurch kann eine Ansammlung von Feuchtigkeit auf der Oberfläche des Befestigungsstiftes 29 wirksam verhindert werden.

In der Fig. 5 ist schematisch eine Stromzufuhrleitung 40 zur Stromversorgung eines Transformators 41 dargestellt. Außerdem sind elektrische Anschlussleitungen 42 zwischen dem Transformator 41 und den Elektroden 20, 21 beziehungsweise zwischen den Elektroden 20, 21 dargestellt. Der Transformator 41 kann gekapselt, insbesondere feuchtigkeitsdicht gekapselt, ausgebildet sein. Insbesondere die Führung der Stromzufuhrleitung 40 und/oder der elektrischen Anschlussleitungen 42 kann feuchtigkeitsdicht gekapselt ausgeführt sein.

Das Plasmafilter-Modul 1 kann mit einer Steuereinheit 43 versehen sein. Mittels der Steuereinheit 43 kann die Erzeugung eines Plasmas mittels der Elektroden 20, 21 gesteuert werden. Die Steuereinheit 43 kann insbesondere einen Sensor umfassen, mittels welchem der Betriebszustand des Lüfterbausteins 15 direkt oder indirekt erfassbar ist. Als Sensor dient insbesondere ein Drucksensor, welcher insbesondere eine Differenz im Inneren des Gehäuses 4 zum Druck außerhalb des Gehäuses 4 erfasst. Hierdurch ist es möglich, die Aktivierung der Plasmafilter-Einheit 3 automatisch an die des Lüfterbausteins 15 zu koppeln. Die Plasmafilter-Einheit 3 kann insbesondere derart an den Lüfterbaustein 15 gekoppelt sein, dass sie bei Aktivierung des Lüfterbausteins 15 automatisch eingeschaltet und/oder bei Deaktivierung des Lüfterbausteins 15 automatisch ausgeschaltet wird. Hierdurch wird der Betrieb der Plasmafilter-Einheit 3 vereinfacht.

Eine manuelle Betätigung der Plasmafilter-Einheit 3 ist prinzipiell ebenso möglich.

## Patentansprüche

1. Vorrichtung zur Anordnung einer oder mehrerer Elektroden (20, 21) einer Plasmafilter-Einheit (3) in einem Gehäuse (4), umfassend
1.1. mindestens einen Elektrodenhalter (24) zur Halterung der einen oder mehreren Elektroden (20, 21) und
1.2. mindestens ein Befestigungselement (25) mit
1.2.1. einem Befestigungsmittel zur Befestigung des mindestens einen Elektrodenhalters (24) im Gehäuse (4) und
1.2.2. einem Abschirmmittel zur Abschirmung des Befestigungsmittels,
1.2.3. wobei das Befestigungsmittel jeweils einen Kriechbereich zur Bereitstellung einer Kriechstrecke mit einer vorgegebenen Mindestlänge (lₘᵢₙ) aufweist,
1.2.4. wobei das Befestigungsmittel jeweils von einem Abschirmmittel zumindest bereichsweise umgeben ist, 1.2.5. wobei das Befestigungsmittel im Kriechbereich einen vorgegebenen Mindestabstand (dₘᵢₙ) zum nächstliegenden Abschirmmittel aufweist,
1.2.6. wobei das Befestigungsmittel jeweils als Befestigungsstift (29) ausgebildet ist, und
1.2.7. wobei das Abschirmmittel als Abschirmhülse (30) ausgebildet ist, welche das Befestigungsmittel jeweils zumindest bereichsweise umgibt.

2. Vorrichtung gemäß einem der vorhergehenden Ansprüche, **dadurch gekennzeichnet, dass** das Befestigungsmittel und das Abschirmmittel jeweils zumindest teilweise aus einem elektrisch isolierenden Material ausgebildet sind.

3. Vorrichtung gemäß einem der vorhergehenden Ansprüche, **dadurch gekennzeichnet, dass** das Befestigungsmittel und das Abschirmmittel fix miteinander verbunden sind.

4. Plasmafilter-Modul (1) umfassend
4.1. ein Gehäuse (4) mit
4.1.1. mindestens einer Einströmöffnung (8) und
4.1.2. mindestens einer Ausströmöffnung (9) und
4.2. einer in dem Gehäuse (4) angeordneten Plasmafilter-Einheit (3) mit mindestens zwei Elektroden (20, 21),
4.3. wobei die Elektroden (20, 21) mittels einer Vorrichtung gemäß einem der vorhergehenden Ansprüche im Gehäuse (4) angeordnet sind.

5. Plasmafilter-Modul (1) gemäß Anspruch 4, **dadurch gekennzeichnet, dass** die Elektroden (20, 21) mittels der Vorrichtung gemäß einem der Ansprüche 1 bis 3 im Gehäuse (4) aufgehängt sind.

6. Plasmafilter-Modul (1) gemäß einem der Ansprüche 4 bis 5, **dadurch gekennzeichnet, dass** der Elektrodenhalter (24), das mindestens eine Befestigungsmittel und das mindestens eine Abschirmmittel einen Mindestabstand (b) von einem Boden (5) des Gehäuses (4) aufweisen.

7. Plasmafilter-Modul (1) gemäß einem der Ansprüche 4 bis 6, **dadurch gekennzeichnet, dass** das Gehäuse (4) eine Gesamthöhe (h) von höchstens 16 cm aufweist.

8. Plasmafilter-Modul (1) gemäß einem der Ansprüche 4 bis 7, **dadurch gekennzeichnet, dass** die Einströmöffnung (8) in einer Seitenwand (7) des Gehäuses (4) angeordnet ist.

9. Plasmafilter-Modul (1) gemäß einem der Ansprüche 4 bis 8, **dadurch gekennzeichnet, dass** es für einen bestimmungsgemäßen Gebrauch horizontal oder vertikal montierbar ist.

10. Plasmafilter-Modul (1) gemäß einem der Ansprüche 4 bis 9, **dadurch gekennzeichnet, dass** es in einem Sockelbereich (12) eines Küchenunterschranks (13) platzierbar ist.

11. Dunstabzugs-Vorrichtung mit
11.1. einer Absaugeinrichtung zum Absaugen von Kochdünsten in einem Kochdunststrom,
11.2. einem Abluftkanal (14, 16) zur Strömungsleitung des Kochdunststroms und
11.3. einem Plasmafilter-Modul (1) gemäß einem der Ansprüche 4 bis 9.

12. Dunstabzugs-Vorrichtung gemäß Anspruch 11, **dadurch gekennzeichnet, dass** das Plasmafilter-Modul (1) im Sockelbereich (12) eines Küchenunterschranks (13) platzierbar ist.

## Claims

1. Device for arranging one or more electrodes (20, 21) of a plasma filter unit (3) in a housing (4), comprising
1.1 at least one electrode holder (24) for holding the one or more electrodes (20, 21), and
1.2 at least one fastening element (25) with
1.2.1. a fastening means for fastening the at least one electrode holder (24) in the housing (4) and
1.2.2. a shielding means for shielding the fastening means,
1.2.3. wherein the fastening means has a respective creep region to provide a creep distance of a predetermined minimum length (lmin),
1.2.4. wherein the fastening means is surrounded in each case at least in portions by a shielding means,
1.2.5. wherein the fastening means in the creep area has a predetermined minimum distance (dₘᵢₙ) from the nearest shielding means,
1.2.6. wherein the fastening means is formed in each case as a fastening pin (29), and
1.2.7. wherein the shielding means is formed as a shielding sleeve (30), which surrounds the fastening means at least in portions.

2. Device according to any one of the preceding claims, **characterized in that** the fastening means and the shielding means are each formed at least partially of an electrically insulating material.

3. Device according to any one of the preceding claims, **characterized in that** the fastening means and the shielding means are fixedly connected to each other.

4. Plasma filter module (1) comprising
4.1. a housing (4) with
4.1.1. at least one inflow opening (8) and
4.1.2 at least one outflow opening (9) and
4.2. a plasma filter unit (3) arranged in the housing (4) with at least two electrodes (20, 21),
4.3. wherein the electrodes (20, 21) are arranged in the housing (4) by means of a device according to one of the preceding claims.

5. Plasma filter module (1) according to claim 4, **characterized in that the** electrodes (20, 21) are suspended in the housing (4) by means of the device according to any one of claims 1 to 3.

6. Plasma filter module (1) according to any one of claims 4 to 5, **characterized in that** the electrode holder (24), the at least one fastening means and the at least one shielding means are at a minimum distance (b) from a bottom (5) of the housing (4).

7. Plasma filter module (1) according to any one of claims 4 to 6, **characterized in that** the housing (4) has an total height (h) of at most 16 cm.

8. Plasma filter module (1) according to any one of claims 4 to 7, **characterized in that** the inflow opening (8) is arranged in a side wall (7) of the housing (4).

9. Plasma filter module (1) according to any one of claims 4 to 8, **characterized in that** it can be mounted horizontally or vertically for an intended use.

10. Plasma filter module (1) according to any one of claims 4 to 9, **characterized in that** it can be placed in a base region (12) of a kitchen base cabinet (13).

11. Fume extraction device with
11.1. of an extraction device for extracting cooking vapours in a cooking vapour flow,
11.2. an exhaust air duct (14, 16) for guiding the cooking vapour flow and
11.3. a plasma filter module (1) according to any one of claims 4 to 9.

12. Fume extraction device according to claim 11, **characterized in that** the plasma filter module (1) can be placed in the base region (12) of a kitchen base cabinet (13).

## Revendications

1. Dispositif pour agencer une ou plusieurs électrodes (20, 21) d'une unité de filtre à plasma (3) dans un boîtier (4), comprenant
1.1. au moins un support d'électrode (24) pour maintenir la ou les électrodes (20, 21), et
1.2. au moins un élément de fixation (25) avec
1.2.1. un moyen de fixation pour fixer l'au moins un support d'électrode (24) dans le boîtier (4) et
1.2.2. un moyen de blindage pour blinder le moyen de fixation,
1.2.3. dans lequel le moyen de fixation a une zone de fuite respective pour fournir une ligne de fuite d'une longueur minimale (lₘᵢₙ) prédéterminée,
1.2.4 dans lequel le moyen de fixation est entouré d'un moyen de blindage respectivement, au moins par endroits,
1.2.5. dans lequel le moyen de fixation dans la zone de fuite a une distance minimale (dₘᵢₙ) prédéterminée du moyen de blindage le plus proche,
1.2.6 dans lequel le moyen de fixation est formé dans chaque cas comme une broche de fixation (29), et
1.2.7 dans lequel le moyen de blindage est formé comme un manchon de blindage (30) qui entoure le moyen de fixation dans chaque cas, au moins par endroits.

2. Dispositif selon l'une quelconque des revendications précédentes, **caractérisé en ce que** le moyen de fixation et le moyen de blindage sont chacun au moins partiellement formés d'un matériau électriquement isolant.

3. Dispositif selon l'une quelconque des revendications précédentes, **caractérisé en ce que** le moyen de fixation et le moyen de blindage sont reliés de manière fixe l'un à l'autre.

4. Module de filtre à plasma (1) comprenant
4.1. un boîtier (4) avec
4.1.1. au moins une ouverture d'entrée (8) et
4.1.2. au moins une ouverture de sortie (9) et
4.2. une unité de filtre à plasma (3) disposée dans le boîtier (4) et comportant au moins deux électrodes (20, 21),
4.3. dans lequel les électrodes (20, 21) sont disposées dans le boîtier (4) au moyen d'un dispositif selon l'une quelconque des revendications précédentes.

5. Module de filtre à plasma (1) selon la revendication 4, **caractérisé en ce que** les électrodes (20, 21) sont suspendues dans le boîtier (4) au moyen du dispositif selon l'une quelconque des revendications 1 à 3.

6. Module de filtre à plasma (1) selon l'une quelconque des revendications 4 à 5, **caractérisé en ce que** le support d'électrode (24), l'au moins un moyen de fixation et l'au moins un moyen de blindage ont une distance minimale (b) d'un fond (5) du boîtier (4).

7. Module de filtre à plasma (1) selon l'une quelconque des revendications 4 à 6, **caractérisé en ce que** le boîtier (4) présente une hauteur totale (h) d'au plus 16 cm.

8. Module de filtre à plasma (1) selon l'une quelconque des revendications 4 à 7, **caractérisé en ce que** l'ouverture d'entrée (8) est disposée dans une paroi latérale (7) du boîtier (4).

9. Module de filtre à plasma (1) selon l'une quelconque des revendications 4 à 8, **caractérisé en ce qu'**il peut être monté horizontalement ou verticalement pour une utilisation prévue.

10. Module de filtre à plasma (1) selon l'une quelconque des revendications 4 à 9, **caractérisé en ce qu'**il peut être placé dans une zone de base (12) d'un meuble bas de cuisine (13).

11. Dispositif de hotte aspirante avec
11.1. un dispositif d'aspiration pour aspirer des vapeurs de cuisson dans un flux de vapeurs de cuisson,
11.2. un conduit d'évacuation d'air (14, 16) pour guider l'écoulement du flux de vapeurs de cuisson, et
11.3. un module de filtre à plasma (1) selon l'une quelconque des revendications 4 à 9.

12. Dispositif de hotte aspirante selon la revendication 11, **caractérisé en ce que** le module de filtre à plasma (1) peut être placé dans la zone de base (12) d'un meuble bas de cuisine (13).
